Europäisches Patentamt

European Patent Office

Office européen des brevets

(19)

(11) **EP 0 930 433 A1**

(12) # EUROPÄISCHE PATENTANMELDUNG

(43) Veröffentlichungstag:
21.07.1999 Patentblatt 1999/29

(51) Int. Cl.⁶: **F03B 17/04**

(21) Anmeldenummer: 98100893.1

(22) Anmeldetag: 20.01.1998

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(71) Anmelder: **Thien, Gerhard**
**15890 Eisenhüttenstadt (DE)**

(72) Erfinder: **Thien, Gerhard**
**15890 Eisenhüttenstadt (DE)**

(74) Vertreter:
**TER MEER STEINMEISTER & PARTNER GbR**
**Mauerkircherstrasse 45**
**81679 München (DE)**

(54) **Auftriebsmotor**

(57) Die Erfindung betrifft eine Vorrichtung zur Erzeugung eines Drehmoments mit zumindest zwei Körpern (12), die so miteinander gekoppelt sind, daß sie eine Umlaufbewegung ausführen können, bei der sich der eine Körper (12) in Richtung der Schwerkraft und der andere entgegengesetzt dazu bewegt, wobei jeder Körper (12) beim Wechsel der Bewegungsrichtung sein Volumen so ändert, daß das Volumen des bzw. der sich in Richtung der Schwerkraft bewegenden Körper (12) kleiner ist als das der sich in entgegengesetzter Richtung bewegenden Körper (12).

Fig. 1

EP 0 930 433 A1

**Beschreibung**

Die Erfindung betrifft eine Vorrichtung zur Erzeugung eines Drehmoments.

Derartige Vorrichtungen werden in der Technik in vielfältiger Weise benötigt, insbesondere als Antrieb für Maschinen und dergleichen.

Der Erfindung liegt die Aufgabe zugrunde, eine weitere Vorrichtung der eingangs genannten Art bereitzustellen, die insbesondere Auftriebskräfte zur Erzeugung eines Drehmoments nutzt.

Diese Aufgabe wird durch die Vorrichtung nach Anspruch 1 gelöst.

Erfindungsgemäß ist also vorgesehen, daß zumindest zwei Körper so miteinander gekoppelt sind, daß sie eine Umlaufbewegung ausführen können, bei der sich der eine Körper in Richtung der Schwerkraft und der andere entgegengesetzt dazu bewegt, wobei jeder Körper beim Wechsel der Bewegungsrichtung sein Volumen so ändert, daß das Volumen des bzw. der sich in Richtung der Schwerkraft bewegenden Körper kleiner ist als das der sich in entgegengesetzter Richtung bewegenden Körper.

Die Änderung des Volumens jedes Körpers erfolgt also derart, daß es vergrößert wird, wenn seine nach unten, also im wesentlichen in Richtung der Schwerkraft laufende Bewegung in eine nach oben, also entgegen der Schwerkraft gerichtete Bewegung wechselt, während es sich verkleinert, sobald die Bewegung des Körpers wieder zu der nach unten gerichteten Bewegung wechselt. Durch diese bei Wechsel der Bewegungsrichtung abwechselnde Vergrößerung und Verkleinerung der Volumen der Körper wird sichergestellt, daß die sich jeweils nach oben bewegenden Körper infolge ihres größeren Volumens eine größere Auftriebskraft als die sich nach unten bewegenden Körper erfahren. Hierdurch wird die Umlaufbewegung der Körper bewirkt.

Besonders vorteilhaft ist es, wenn die miteinander gekoppelten Körper so ausgebildet sind, daß trotz der abwechselnden Volumenänderungen der einzelnen Körper das Gesamtvolumen aller Körper im wesentlichen konstant ist.

Obwohl die erfindungsgemäße Vorrichtung grundsätzlich auch mit einer ungeradzahligen Anzahl von Körpern betrieben werden kann, ist vorzugsweise vorgesehen, daß die Körper in Bezug auf die Umlaufbewegung paarweise einander gegenüberliegend angeordnet sind. Durch diese symmetrische, paarweise Anordnung der Körper wird eine besonders gleichmäßige Drehmomenterzeugung sichergestellt.

Grundsätzlich kann die erfindungsgemäße Vorrichtung in jedem Fluid betrieben werden, das bei praktikablen Volumenänderungen der Körper einen genügend großen Auftriebszuwachs liefert, so daß zumindest in der Vorrichtung wirkende Reibungskräfte überwunden werden können. Vorzugsweise ist jedoch vorgesehen, daß die Körper zumindest während eines Teils ihrer Umlaufbewegung in eine Flüssigkeit eintauchen. Durch die zumindest teilweise, zweckmäßigerweise jedoch vollständige Anordnung der Vorrichtung in einer Flüssigkeit, insbesondere in Wasser, läßt sich bereits bei einer relativ kleinen Volumenänderung eine verhältnismäßig große Erhöhung des Auftriebs erreichen. Beispielsweise liefert eine Vergrößerung des Volumens der einzelnen Körper um jeweils 1 dm$^3$ (1 l) eine Erhöhung der Auftriebskraft um 9,81 N (1 kp).

Besonders zweckmäßig ist es, wenn die einzelnen Körper durch ein Zugelement miteinander verbunden sind, das ringförmig über zumindest eine Umlenkeinrichtung läuft, wobei die Umlenkeinrichtung zumindest ein Umlenkrad aufweist. das auf einer Welle gelagert ist, an der das Drehmoment abgenommen werden kann.

Um die Differenz der Auftriebskräfte möglichst vollständig zur Drehmomenterzeugung nutzen zu können, ist vorgesehen, daß jeweils zwei einander paarweise zugeordnete Körper, vorzugsweise alle Körper die gleiche Masse aufweisen. Auf diese Weise läßt sich die Vorrichtung hinsichtlich der wirkenden Gewichtskräfte vollständig im Gleichgewicht halten.

Bei einer besonders bevorzugten Ausgestaltung der Erfindung ist vorgesehen, daß Jeder Körper als Kolben-Zylinder-Einheit ausgebildet ist, wobei der Kolben in Abhängigkeit von der Ausrichtung der Kolben-Zylinder-Einheit zur Schwerkraft von der auf ihn wirkenden Gewichtskraft in seine ausgefahrene oder eingeschobene Stellung bewegbar ist.

Um dabei sicherzustellen, daß die Verschiebung des Kolbens, insbesondere seine Auszugsbewegung allein aufgrund der auf ihn wirkenden Gewichtskraft erfolgen kann, ist vorgesehen, daß die Kolbenlänge $l_k$ der folgenden Gleichung genügt:

$$l_k \geq h \cdot \frac{\rho_f}{\rho_k}$$

wobei h die maximale Eintauchtiefe des Körpers in die Flüssigkeit, $\rho_f$ die Dichte der Flüssigkeit und $\rho_k$ die Dichte des Kolbenmaterials sind.

Besonders zweckmäßig ist es, wenn die einzelnen Kolben-Zylinder-Einheiten so angeordnet sind, daß jede Kolben-Zylinder-Einheit beim Wechsel der Bewegungsrichtung zwangweise aus ihrer einen Lage, in der der Kolben ausgefahren bzw. eingeschoben ist, in ihre andere Lage, in der Kolben eingeschoben bzw. ausgefahren ist, überführt wird.

Bei einer weiteren Ausgestaltung der Erfindung ist vorgesehen, daß die Zylinderkammern der einzelnen Kolben-Zylinder-Einheiten miteinander verbunden sind, um einen Fluidaustausch zu ermöglichen, wobei die Zylinderkammern ringförmig, vorzugsweise über einen Schlauch, miteinander verbunden sind.

Auf diese Weise läßt sich ein geschlossenes Fluidsystem in den miteinander verbundenen Zylinderkammern ausbilden, das bewirkt, daß der durch das Einschieben eines zur Abwärtsbewegung wechselnden Kolbens entstehende Druck über das geschlossene Fluidsystem an den in seine ausgezogene Stellung ausfahrenden Kolben der zur nach oben gerichteten Bewegung wechselnden Kolben-Zylinder-Einheit abgegeben werden kann, so daß ein zusätzlicher Druck auf den Kolben dessen Bewegung in die ausgezogene Stellung zur Vergrößerung des Volumens unterstützt und eventuell bestehende Reibungsverluste ausgleicht.

Als Fluid in den Zylinderkammern kann einfach Luft oder ein anderes Gas verwendet werden; es ist aber auch möglich, beispielsweise ein ganz leichtes Öl oder eine ähnliche Flüssigkeit als Fluid zu verwenden, die den Vorteil hat, daß sich der Druck besonders gut übertragen läßt.

Die Erfindung wird im folgenden beispielsweise anhand der Zeichnung näher erläutert. Es zeigen:

> **Figur 1** eine stark vereinfachte schematische Darstellung einer erfindungsgemäßen Vorrichtung mit einem Paar von Körpern zur Erzeugung einer Auftriebsdifferenz,
> **Figur 2a** eine vereinfachte schematische Schnittdarstellung einer Kolben-Zylinder-Einheit mit ausgefahrenem Kolben,
> **Figur 2b** eine vereinfachte schematische Schnittdarstellung einer Kolben-Zylinder-Einheit mit eingeschobenem Kolben, und
> **Figur 3** eine vereinfachte schematische Darstellung einer erfindungsgemäßen Vorrichtung mit einer Vielzahl von paarweise angeordneten Körpern zur Erzeugung einer Auftriebsdifferenz.

In den Figuren der Zeichnung sind einander entsprechende Bauteile mit gleichen Bezugszeichen versehen.

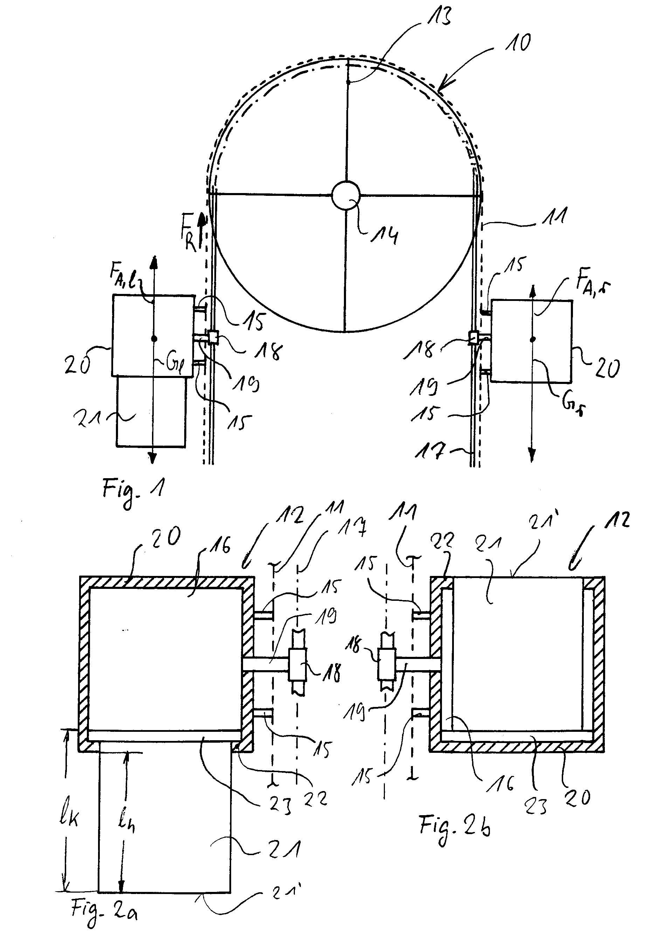

Wie Figur 1 zeigt, umfaßt die erfindungsgemäße Vorrichtung zur Erzeugung eines Drehmoments eine Umlenkeinrichtung 10 für ein Zugelement 11, an dem zwei Kolben-Zylinder-Einheiten 12 als Paar von Körpern zur Erzeugung einer Auftriebsdifferenz angebracht sind. Die Umlenkeinrichtung 10 umfaßt ein Umlenkrad 13, das auf einer Welle 14 gelagert ist, an der das von der erfindungsgemäßen Vorrichtung erzeugte Drehmoment abgenommen werden kann. Beispielsweise kann an die Welle 14 ein Generator zur Erzeugung von elektrischer Energie angeschlossen werden.

Als Umlenkrad 13 kann je nach verwendetem Zugelement 11 ein Zahnrad oder eine Seiltrommel oder dergleichen eingesetzt werden. In entsprechender Weise läßt sich das Zugelement 11 als Kette, Seil, Zahnriemen, Zugband oder dergleichen ausgestalten.

Um die auf die Kolben-Zylinder-Einheiten 12 wirkenden Kräfte auf das Zugelement 11 zu übertragen, ist jede Kolben-Zylinder-Einheit 12 mittels in Längsrichtung des Zugelements 11 voneinander beabstandeten Befestigungsstiften 15 oder dergleichen am Zugelement 11 gehalten.

Durch diese Befestigung der Kolben-Zylinder-Einheiten 12 am Zugmittel 11, also durch die in Längsrichtung des Zugmittels 11 und damit in Bewegungsrichtung der Kolben-Zylinder-Einheiten 12 voneinander beabstandeten Befestigungsmittel wird erreicht, daß die Kolben-Zylinder-Einheiten 12 während der gesamten Umlaufbewegung relativ zurjeweiligen Bewegungsrichtung die gleiche Ausrichtung beibehalten, so daß sie beim Wechsel der Bewegungsrichtung relativ zur Schwerkraft zwangsweise ihre Lage relativ zur Gravitation ändern.

Um die Zylinderkammern 16 der Kolben-Zylinder-Einheiten 12 miteinander zu verbinden, so daß diese miteinander kommunizieren, ist als Fluidleitung ein Schlauch 17 oder eine ähnliche Verbindung vorgesehen, der über entsprechende Anschlußstücke 18 und Anschlußstutzen 19 an den Zylindern 20 der Kolben-Zylinder-Einheiten 12 befestigt ist, so daß der Schlauch 17 mit den jeweiligen Zylinderkammern 16 in Fluidverbindung steht.

Wie in Figur 2a und 2b näher dargestellt ist, ist in jedem Zylinder 20 ein Kolben 21 derart gleitend angeordnet, daß er, wenn der Zylinder 20 wie in Figur 2a dargestellt, mit seiner offenen Seite nach unten angeordnet ist, aufgrund der auf ihn wirkenden Gewichtskraft nach unten in seine ausgezogene oder ausgefahrene Stellung gleitet. Um dabei ein Herausfallen des Kolbens 21 aus dem Zylinder 20 zu verhindern, weist der Zylinder 20 beispielsweise einen nach innen gerichteten Flansch 22 auf, während der Kolben 21 einen mit diesem zusammenwirkenden nach außen gerichteten Flansch 23 trägt. Am Flanch 22 sind in nicht näher dargestellter Weise Dichtmittel angeordnet, die die Zylinderkammer 16 gasdicht abdichten, ohne die Verschiebebewegung des Kolbens 21 wesentlich zu behindern, um sicherzustellen, daß das die Kolben-Zylinder-Einheit 12 umgebende Medium nicht in die Zylinderkammer 16 eindringen kann.

Im folgenden wird vorausgesetzt, daß die erfindungsgemäße Vorrichtung vollständig in Wasser angeordnet ist, und daß die Zylinderkammern 16, die über den Schlauch 17 miteinander verbunden und ein geschlossenes Fluidsystem bilden, mit Luft gefüllt sind. Anstelle von Wasser läßt sich auch ein anderes Medium verwenden, das eine geringe Viskosität und eine möglichst hohe Dichte aufweist. Bei der hier vorausgesetzten Verwendung von Wasser kann anstelle von Luft auch ein möglichst leichtes Öl als die Zylinderkammern 16 ausfüllendes Fluid eingesetzt werden. Wesentlich für die Auswahl der bei der erfindungsgemäßen Vorrichtung vorgesehenen strömungsfähigen Medien ist es, daß die Dichte des in den Zylinderkammern 16 vorgesehenen Mediums kleiner, vorzugsweise sehrviel kleiner, ist als die des die Kolben-Zylinder-Einheiten 12 umgebenden Mediums.

Der Dichteunterschied zwischen Luft und Wasser ist so groß, daß bei der folgenden Erläuterung der Erfindung die Masse der in den Zylinderkammern 16 enthaltenen Luft völlig außer acht gelassenen werden kann.

Um die zur Erzeugung des Drehmoments mittels des Zugelements 11 auf den Umfang des Umlenkrades 13 übertragende, resultierende Kraft $F_R$ zu ermitteln, sollen zunächst die auf die Kolben-Zylinder-Einheiten 12 wirkenden Kräfte einzeln betrachtet werden. Auf die in Figur 1 linke Kolben-Zylinder-Einheit 12 wirkt neben ihrer Gewichtskraft $G_l$ der vom umgebenden Wasser erzeugte Auftrieb $F_A(V_l)$, der eine scheinbare Verringerung der Gewichtskraft $G_l$ bewirkt. Der Auftrieb hängt bekanntermaßen vom Volumen $V_l$ der in Figur 1 linken Kolben-Zylinder-Einheit 12 ab und berechnet sich nach der Gleichung $F_A(V_l) = g \cdot \rho_f \cdot V_l$. Hierbei sind g die Erdbeschleunigung und pf die Dichte des die Kolben-Zylinder-Einheiten 12 umgebenden Mediums, also des Wassers.

In entsprechender Weise greift an der in Figur 1 rechten Kolben-Zylinder-Einheit 12 neben der auf sie wirkenden Gewichtskraft $G_r$ der Auftrieb $F_A(V_r)$ an, der der Gleichung $F_A(V_r) = g \cdot \rho_f \cdot V_r$ genügt, wobei $V_r$ das Volumen der rechten Kolben-Zylinder-Einheit 12, also der Kolben-Zylinder-Einheit 12 bei eingezogenem Kolben 21 ist.

Unter Berücksichtigung, daß die von der linken und der rechten Kolben-Zylinder-Einheit 12 auf das Zugelement 11 übertragenen Kräfte bezüglich des Zugelements 11 in entgegengesetzten Richtungen wirken und der jeweilige Auftrieb entgegengesetzt zur Gewichtskraft wirkt, ergibt sich für die resultierende Kraft $F_R$ die folgende Gleichung:

$$F_R = F_A(V_l) - F_A(V_r) + G_r - G_l$$

Mit den obigen Gleichungen für die Auftriebskräfte ergibt sich dann für die resultierende Kraft $F_R$ die folgende Gleichung:

$$F_R = g \cdot \rho_f \cdot (V_l - V_R) + (G_r - G_l)$$

Werden nun, wie dies bei der Erfindung bevorzugterweise vorgesehen ist, die Kolben-Zylinder-Einheiten 12 in gleicher Weise ausgebildet, so daß sie auch das gleiche Gewicht besitzen, so heben sich die Gewichtskräfte auf, und die auf das Umlenkrad 13 wirkende resultierende Kraft $F_R$ zur Erzeugung des Drehmoments an der Welle 14 hängt nur noch von der Volumendifferenz $\Delta V = V_l - V_r$ der beiden Kolben-Zylinder-Einheiten 12 ab. Die Volumendifferenz $\Delta V$ entspricht bei einem zylindrischen Kolben 21 dem Produkt aus Kolbenhub $l_h$ und Kolbenquerschnittsfläche $A_k$. Für die resultierende Kraft $F_R$ gilt dann

$$F_R = g \cdot \rho_f \cdot l_h \cdot A_k$$

Um sicherzustellen, daß der Kolben 21 gegen die auf seine freie Fläche 21' wirkende, in Figur 2a nach oben gerichtete Kraft, die durch den jeweils herrschenden Wasserdruck bewirkt wird, in seine ausgefahrene Stellung verschoben werden kann, wird die Kolbenlänge $l_k$ vorzugsweise so gewählt, daß sie der folgenden Gleichung genügt:

$$l_k \geq h \cdot \frac{\rho_f}{\rho_k}$$

Dabei ist h die größtmögliche Eintauchtiefe der Kolben-Zylinder-Einheit 12 und damit des Kolbens 21, also der Abstand der tiefsten Stellung der freien Fläche 21' des Kolbens 21 von der Wasseroberfläche, und $\rho_k$ die Dichte des Kolbenmaterials.

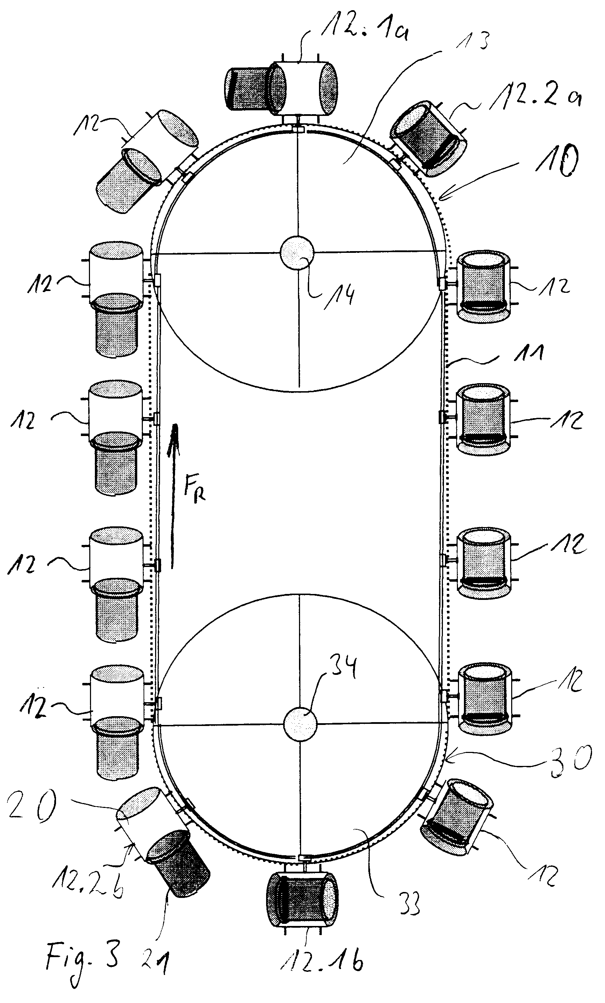

Die Funktion der erfindungsgemäßen Vorrichtung wird nun anhand von Figur 3 näher erläutert, die ein Ausführungsbeispiel der Erfindung mit 14 jeweils paarweise zueinander angeordneten Kolben-Zylinder-Einheiten 12 zeigt. Neben der oberen Umlenkeinrichtung 10 weist diese Vorrichtung eine untere Umlenkeinrichtung 30 mit einem Umlenkrad 33 auf, das auf einer unteren Welle 34 angeordnet ist.

Wie in Figur 3 zu erkennen ist, weisen die sechs auf der linken Seite angeordneten Kolben-Zylinder-Einheiten 12 jeweils ein um $\Delta V = V_l - V_r = l_h \cdot A_k$ größeres Volumen auf als die auf der rechten Seite angeordneten Kolben-Zylinder-Einheiten 12, da sich bei ihnen die Kolben 21 in der ausgefahrenen Stellung befinden. Infolgedessen wirkt auf das Zugelement 11 eine resultierende Kraft $F_R$, die unter Vernachlässigung von Reibungsverlusten und dergleichen $6 \cdot g \cdot \rho_f \cdot \Delta V$ beträgt. Diese Kraft $F_R$ versetzt die Kolben-Zylinder-Einheiten 12 in eine Umlaufbewegung, bei der jeweils der Kolben 21 einer Kolben-Zylinder-Einheit 12.2a, die von der Aufwärtsbewegung auf der linken Seite zur Abwärtsbewegung auf der rechten Seite wechselt, allein aufgrund der auf ihn wirkenden Gewichtskraft in den Zylinder 20 zur Volumenverringerung hineingeschoben wird. Gleichzeitig wechselt im Bereich der unteren Umlenkeinrichtung 30 eine Kolben-Zylinder-Einheit 12.2b von der nach unten gerichteten Bewegung auf der rechten Seite zu der nach oben gerichteten Bewegung auf der linken Seite, wobei der Kolben 21 zur Volumenvergrößerung aufgrund der auf ihn wirkenden Gewichtskraft entgegen dem in diesem Bereich herrschenden Wasserdruck aus dem Zylinder 20 herausfährt.

Da jeweils zwei Kolben-Zylinder-Einheiten 12 einander als Paare zugeordnet sind, so daß sie bezüglich der Umlaufbewegung einander gegenüberliegend angeordnet sind, wie die oberste und unterste Kolben-Zylinder-Einheit 12.1a und 12.1b oder die Kolben-Zylinder-Einheiten 12.2a und 12.2b, erfolgt jeweils das Einschieben eines Kolbens 21, also beim Wechsel von der Stellung der Kolben-Zylinder-Einheit 12.1a zu der der Kolben-Zylinder-Einheit 12.2a, während beim entsprechenden Wechsel von der Position der Kolben-Zylinder-Einheit 12.1b zu der der Kolben-Zylinder-Einheit 12.2b der Kolben ausgefahren wird. Durch die Verdrängung des Luftvolumens in der Zylinderkammer 16 der Kolben-Zylinder-Einheit 12.2a, die zu einer Erhöhung des Luftdrucks in dem geschlossenen System führt, wird das Ausfahren des Kolbens 21 der entsprechend gegenüberliegenden Kolben-Zylinder-Einheit 12.2b unterstützt.

Unter der Voraussetzung, daß beispielsweise Stahl mit einer Dichte von 7,87 kg/dm$^3$ als Material für den Kolben 20 der Kolben-Zylinder-Einheiten 12 eingesetzt werden soll und die Vorrichtung an ihrem tiefsten Punkt ca. 2 m tief im Wasser angeordnet ist, ist eine Kolbenlänge $l_k$ von etwa 25 cm erforderlich. Wird dementsprechend ein Kolben mit einem Durchmesser von beispielsweise 22 cm und der erforderlichen Länge von 25 cm verwendet, der einen Kolbenhub von 20 cm ausführen kann, so ergibt sich eine Volumenänderung $\Delta V$ von ca. 4 dm$^3$, was einen Auftrieb von etwa 40 N (entsprechend 4 kg verdrängten Wassers) zur Folge hat. Bei sechs derartigen Kolben-Zylinder-Einheiten ergibt sich dann eine resultierende Kraft $F_R$ von 235 N, die in Abhängigkeit vom Durchmesser des Umlenkrades 13 ein entsprechendes Drehmoment an der Welle 14 erzeugt, das zum Antrieb eines Generators zur Erzeugung elektrischer Energie verwendet werden kann.

Durch geeignete Materialwahl und entsprechende Dimensionierung der einzelnen Bauelemente der erfindungsgemäßen Vorrichtung lassen sich Drehmomente über einen weiten Bereich auf einfache Weise erzeugen.

## Patentansprüche

1. Vorrichtung zur Erzeugung eines Drehmoments mit zumindest zwei Körpern (12), die so miteinander gekoppelt sind, daß sie eine Umlaufbewegung ausführen können, bei der sich der eine Körper (12) in Richtung der Schwerkraft und der andere entgegengesetzt dazu bewegt, wobei jeder Körper (12) beim Wechsel der Bewegungsrichtung sein Volumen so ändert, daß das Volumen des bzw. der sich in Richtung der Schwerkraft bewegenden Körper (12) kleiner ist als das der sich in entgegengesetzter Richtung bewegenden Körper (12).

2. Vorrichtung nach Anspruch 1, **dadurch gekennzeichnet,** daß die miteinander gekoppelten Körper (12) so ausgebildet sind, daß trotz der abwechselnden Volumenänderungen der einzelnen Körper (12) das Gesamtvolumen aller Körper (12) im wesentlichen konstant ist.

3. Vorrichtung nach Anspruch 1 oder 2, **dadurch gekennzeichnet**, daß die Körper (12) in Bezug auf die Umlaufbewegung paarweise einander gegenüberliegend angeordnet sind.

4. Vorrichtung nach einem der Ansprüche 1, 2 oder 3, **dadurch gekennzeichnet**, daß die Körper (12) zumindest während eines Teils ihrer Umlaufbewegung in eine Flüssigkeit eintauchen.

5. Vorrichtung nach einem der vorstehenden Ansprüche, **dadurch gekennzeichnet,** daß die einzelnen Körper (12) durch ein Zugelement (11) miteinander verbunden sind, das ringförmig über zumindest eine Umlenkeinrichtung (10) läuft.

6. Vorrichtung nach Anspruch 5, **dadurch gekennzeichnet,** daμ die Umlenkeinrichtung (10) zumindest ein Umlenkrad (13) aufweist, das auf einer Welle (14) gelagert ist, an der das Drehmoment abgenommen werden kann.

7. Vorrichtung nach einem der vorstehenden Ansprüche, **dadurch gekennzeichnet**, daß jeweils zwei einander paarweise zugeordnete Körper (12), vorzugsweise alle Körper (12) die gleiche Masse aufweisen.

8. Vorrichtung nach einem der vorstehenden Ansprüche, **dadurch gekennzeichnet,** daμ jeder Körper als Kolben-Zylinder-Einheit (12) ausgebildet ist, wobei der Kolben (21) in Abhängigkeit von der Ausrichtung der Kolben-Zylinder-Einheit (12) zur Schwerkraft von der auf ihn wirkenden Gewichtskraft in seine ausgefahrene oder eingeschobene Stellung bewegbar ist.

9. Vorrichtung nach Anspruch 8, **dadurch gekennzeichnet,** daß die Kolbenlange ($l_k$) der folgenden Gleichung genügt:

$$l_k \geq h \cdot \frac{\rho_f}{\rho_k}$$

wobei h die maximale Eintauchtiefe des Körpers (12) in die Flüssigkeit, $\rho_f$ die Dichte der Flüssigkeit und $\rho_k$ die Dichte des Kolbenmaterials sind.

10. Vorrichtung nach Anspruch 8 oder 9, **dadurch gekennzeichnet**, daß jede Kolben-Zylinder-Einheit (12) beim Wechsel der Bewegungsrichtung zwangweise aus ihrer einen Lage, in der der Kolben (21) ausgefahren bzw. eingeschoben ist, in ihre andere Lage, in der Kolben (21) eingeschoben bzw. ausgefahren ist, überführt wird.

11. Vorrichtung nach Anspruch 8 oder 10, **dadurch gekennzeichnet,** daß die Zylinderkammern (16) der einzelnen Kolben-Zylinder-Einheiten (12) miteinander verbunden sind, um einen Fluidaustausch zu ermöglichen.

12. Vorrichtung nach Anspruch 11, **dadurch gekennzeichnet**, daß die Zylinderkammern (16) ringförmig, vorzugsweise über einen Schlauch (17) miteinander verbunden sind.

Fig. 1

Fig. 2a

Fig. 2b

Fig. 3

**Europäisches Patentamt**

# EUROPÄISCHER RECHERCHENBERICHT

Nummer der Anmeldung

EP 98 10 0893

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 041 681 A (VETTERKIND HILDA ;VETTERKIND ELKE (DE); VETTERKIND DAGMAR (DE); VE) 16.Dezember 1981 * Seite 3, Absatz 5 - Seite 7, Absatz 2; Abbildungen * | 1-12 | F03B17/04 |
| X | FR 2 718 194 A (JEANTET STEPHANE) 6.Oktober 1995 * Seite 2, Zeile 18 - Seite 3, Zeile 22 * * Seite 6, Zeile 3 - Zeile 14; Abbildungen * | 1-12 | |
| X | DE 28 18 341 A (GENSCH HARRY) 8.November 1979 * Seite 9, Absatz 5 - Seite 12, Absatz 3; Abbildungen * | 1-10 | |
| X | FR 2 442 352 A (BRIOT YVES) 20.Juni 1980 * Seite 3, Zeile 22 - Zeile 33; Abbildungen * | 1-7 | |
| T | J.J.C. VAN LIER: " Het perpetuum mobile van Di Wesseli" DE INGENIEUR, Bd. 100, Nr. 2, Februar 1988, AMSTERDAM, Seite 60-61 XP002068246 * das ganze Dokument * | 1-12 | **RECHERCHIERTE SACHGEBIETE (Int.Cl.6)** F03B |

Der vorliegende Recherchenbericht wurde für alle Patentansprüche erstellt

| Recherchenort | Abschlußdatum der Recherche | Prüfer |
|---|---|---|
| DEN HAAG | 16.Juni 1998 | Criado Jimenez, F |

EPO FORM 1503 03.82 (P04C03)